# FASCICULE DE BREVET EUROPEEN

(11) **EP 3 274 233 B1**
(45) Date de publication et mention de la délivrance du brevet: **05.03.2025**
(21) Numéro de dépôt: 16717980.3
(22) Date de dépôt: 22.03.2016
(51) Int. Cl.: B60W 30/18, B60W 20/00

(54) **SYSTÈME D'ENTRAÎNEMENT POUR VÉHICULE AUTOMOBILE**
ANTRIEBSSYSTEM FÜR KRAFTFAHRZEUG
DRIVE SYSTEM FOR AUTOMOTIVE VEHICLE

(30) Priorité: 27.03.2015 FR 1552600
(43) Date de publication de la demande: 31.01.2018
(73) Titulaire: Renault s.a.s, 92100 Boulogne Billancourt (FR)
(72) Inventeur: VESPASIEN, Jean-Marie, 94600 Choisy-le-Roi (FR)
(74) Mandataire: Renault Group
(86) Numéro de dépôt international: PCT/FR2016/050622
(87) Numéro de publication internationale: WO 2016/156698

(56) Documents cités:
- EP-A1- 2 719 571
- WO-A1-2006/003801
- JP-A- H07 241 004
- US-A1- 2012 265 382
- US-A1- 2014 221 156

## Description

L'invention concerne le domaine des systèmes d'entraînement des véhicules automobiles équipés d'un moteur électrique et d'une transmission comprenant un dispositif de couplage placé entre les roues du véhicule et le moteur électrique, pour coupler et découpler les roues du véhicule et le moteur électrique.

Le découplage des roues et du moteur électrique correspond à une mise au neutre du dispositif de couplage du véhicule. Cette mise au neutre peut notamment être commandée par le conducteur lors d'un arrêt ou si le conducteur souhaite circuler en « roues libres ». Une telle commande est effectuée par l'intermédiaire d'un levier de commande disposé dans l'habitacle du véhicule.

Le désaccouplement est effectué par l'ouverture de la chaîne cinématique du dispositif de couplage.

L'opération de mise au neutre par ouverture du dispositif de couplage est aisément réalisable, mais l'opération de fermeture est autrement plus complexe. En effet, lors du réengagement d'une vitesse, on passe d'une position de neutre dans laquelle le dispositif de couplage est ouvert, à une position dans laquelle le dispositif de couplage est fermé. Lors de ce changement de position, les pièces à coupler ne tournent pas nécessairement à la même vitesse. Des chocs ou des bruits peuvent dès lors se produire, diminuant le confort de conduite.

Le document WO 2011/157477 décrit une méthode de pilotage d'une boîte de vitesses mettant en œuvre une synchronisation du régime des pièces en mouvement avant l'opération de crabotage. Cependant, cette méthode n'est pas parfaite et nuit au confort du véhicule.

Le document WO 2014/170565 décrit un système de pilotage perfectionné d'une boîte de vitesse. Cependant, la réalisation du réengagement n'est idéale que si les pièces à craboter sont immobiles et idéalement positionnées pour un crabotage sans glissement.

Le document JP H07 241004 A décrit par ailleurs un procédé de commande d'un système d'entraînement d'un véhicule automobile comportant un moteur électrique lors d'une mise au neutre par le conducteur.

Le but de la présente invention est d'offrir au conducteur une conduite confortable en proposant notamment un réengagement de vitesse imperceptible après une mise au neutre du véhicule.

L'invention a pour objet un système d'entraînement d'un véhicule automobile comportant un moteur électrique entraînant un arbre moteur, un arbre mené portant des roues et un dispositif de couplage apte à prendre au moins une première position dans laquelle l'arbre moteur et l'arbre mené sont couplés et au moins une deuxième position dans laquelle l'arbre moteur et l'arbre mené sont découplés. Le système comprend en outre un moyen de pilotage du dispositif de couplage et un calculateur apte à commander le moyen de pilotage et comportant un premier module apte à recevoir des signaux relatifs à des paramètres de fonctionnement du véhicule et un deuxième module apte à commander le moteur électrique de sorte que ledit moteur impose un couple nul aux roues en fonction des paramètres de fonctionnement du véhicule.

Ainsi, en fonction des paramètres de fonctionnement du véhicule, on peut effectuer deux mises au neutre différentes. On peut, alternativement, commander un désaccouplement de l'arbre mené et de l'arbre moteur, ce qui revient à effectuer une mise au neutre mécanique traditionnelle ou effectuer une mise au neutre « logicielle » qui consiste à commander le moteur de sorte qu'il impose un couple nul aux roues. Par « imposer un couple nul aux roues », on entend commander le moteur électrique de manière à l'entraîner à une vitesse telle qu'aucun couple n'est exercé par le moteur sur les roues. Les roues tournent donc à la vitesse à laquelle elles tourneraient si elles étaient découplées du moteur.

Avantageusement, les paramètres de fonctionnement du véhicule sont choisis parmi la position du levier de commande du dispositif de couplage, la vitesse du véhicule, un paramètre représentatif du freinage du véhicule et un paramètre de commande du démarrage du véhicule.

Ces paramètres sont représentatifs de l'intention de conduite du conducteur. En interprétant ces paramètres de manière adéquate, il est possible de détecter la volonté du conducteur d'arrêter son véhicule ou de circuler en roue libre.

Selon un mode de réalisation, le système comprend en outre un moteur thermique entraînant un deuxième arbre moteur, le dispositif de couplage étant apte à transmettre sélectivement le couple du premier et/ou du deuxième arbre moteur à l'arbre portant les roues.

Ce système est en effet particulièrement avantageux sur un véhicule hybride thermique et électrique.

L'invention a également pour objet un procédé de commande d'un système d'entraînement d'un véhicule automobile, comprenant un moteur électrique entraînant un arbre moteur et un dispositif de couplage apte à transmettre le couple du moteur électrique à un arbre mené portant des roues, dans lequel on couple et l'on découple l'arbre moteur et l'arbre mené en fonction de paramètres de fonctionnement du véhicule et l'on commande le moteur électrique pour imposer un couple nul aux roues en fonction de paramètres de fonctionnement du véhicule.

Avantageusement, les paramètres de fonctionnement du véhicule sont choisis parmi la position du levier de commande du dispositif de couplage, la vitesse du véhicule, un paramètre représentatif du freinage du véhicule et un paramètre de commande du démarrage du véhicule.

Dans un mode de mise en œuvre, on compare la vitesse du véhicule avec des seuils de vitesse et on couple l'arbre moteur et l'arbre mené portant les roues avec un rapport de transmission différent selon le résultat de la comparaison.

Préférentiellement, le procédé comprend deux seuils de vitesse et deux rapports de transmission.

Dans un mode de mise en œuvre, l'étape de comparaison de la vitesse du véhicule avec les seuils de vitesse s'effectue au moyen d'une hystérésis.

L'hystérésis est avantageuse car elle confère de la robustesse au procédé de commande en évitant les oscillations erratiques du dispositif de couplage entre deux modes de couplage.

D'autres buts, avantages et caractéristiques de l'invention apparaîtront à l'examen de la description détaillée d'un mode de réalisation et d'un mode de mise en œuvre, nullement limitatifs, et des dessins annexés, sur lesquels :
- la figure 1 représente un système d'entraînement d'un véhicule automobile selon un mode de réalisation de l'invention ;
- la figure 2 représente un procédé de commande du système d'entraînement de la figure 1 ; et
- la figure 3 illustre la procédure de mise au neutre logicielle mise en œuvre dans le procédé de commande de la figure 2.

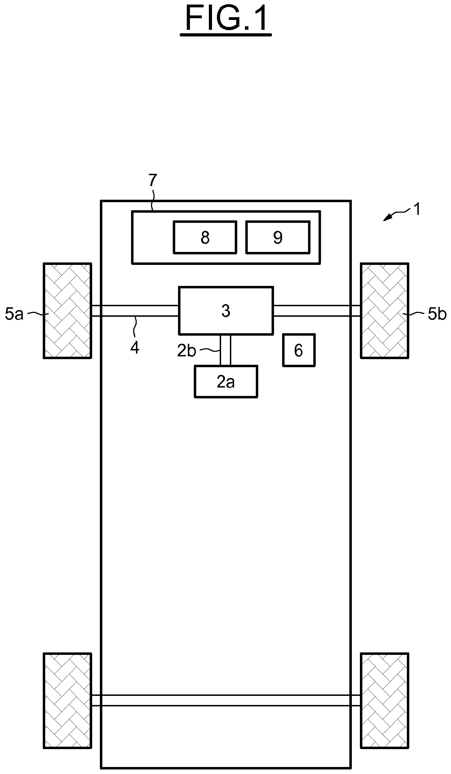

La figure 1 représente très schématiquement un système d'entraînement 1 d'un véhicule automobile pourvu d'un moteur électrique 2a entraînant un arbre moteur 2b. Le système 1 comprend en outre un système de transmission destiné à fournir le couple moteur délivré par le moteur électrique aux roues du véhicule et comprenant un dispositif de couplage 3 apte à coupler l'arbre moteur 2b à un arbre mené 4 portant des roues motrices 5a et 5b du véhicule. Ce dispositif de couplage 3 peut notamment être une boîte de vitesse.

Le dispositif de couplage 3 est apte à prendre trois positions différentes. Dans une première position, le dispositif de couplage 3 est ouvert, l'arbre moteur 2b et l'arbre mené 4 étant cinématiquement découplés.

Alternativement, le dispositif de couplage 3 peut également être fermé, les deux arbres 4 et 2b étant couplés. Dans ce mode de réalisation, il existe deux positions de fermeture du dispositif : la position R1 et la position R2. Chacune de ces positions correspond à un rapport de transmission particulier entre l'arbre moteur 2b et l'arbre mené 4 portant les roues.

Le dispositif de couplage 3 est piloté dans ces différentes positions par un moyen de pilotage 6.

Le système d'entraînement 1 comprend également un calculateur 7 apte à commander le moyen de pilotage 6. Le calculateur 7 comporte un module 8 apte à recevoir des signaux relatifs aux paramètres de fonctionnement du véhicule. Parmi ces paramètres, on compte notamment la position du levier de commande du dispositif de couplage. Ce levier, non représenté, peut être actionné par le conducteur pour lui permettre de choisir une vitesse de marche, par exemple « Drive », « Neutral », « Park » ou « Reverse », c'est-à-dire les positions D, N, P et R, dans le cas d'une boîte de vitesses automatique.

Les autres paramètres de fonctionnement du véhicule transmis au calculateur 7 sont la vitesse du véhicule, un signal d'actionnement de la pédale de frein et la position de la clef de contact. D'autres paramètres de fonctionnement peuvent cependant être transmis au module 8 du calculateur 7 sans sortir du cadre de l'invention.

Le calculateur 7 comprend un deuxième module 9 apte à commander le moteur électrique. Le module 9 permet notamment de réaliser une mise au neutre dite « logicielle ». La mise au neutre logicielle consiste à commander le moteur électrique 2a de manière à imposer un couple nul aux roues, simulant ainsi une « roue libre ». Notons ici que contrairement à une mise au neutre mécanique par désaccouplement de l'arbre mené 4 et de l'arbre moteur 2b, lors de cette mise au neutre « logicielle », l'arbre moteur 2b et l'arbre mené 4 restent cinématiquement lié.

Le système d'entraînement 1 décrit sur la figure 1 comporte un seul moteur, le moteur électrique 2a. Cependant, et sans sortir du cadre de l'invention, un système d'entraînement selon un mode de réalisation de l'invention peut également équiper un véhicule automobile hybride comprenant un moteur thermique. Dans cette configuration, la position de désaccouplement du dispositif de couplage consiste à découpler l'arbre mené des deux arbres moteurs, respectivement l'arbre du moteur électrique et celui du moteur thermique.

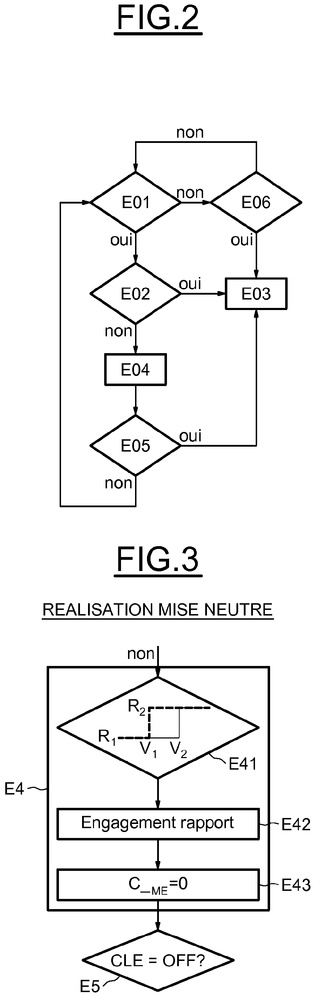

La figure 2 illustre un mode de mise en œuvre d'un procédé de commande d'un système d'entraînement d'un véhicule automobile. Le système d'entraînement commandé par ce procédé est par exemple un système tel que celui décrit à la figure 1. Ainsi, à titre d'exemple nullement limitatif, on désignera les mécanismes commandés par le procédé en faisant référence à la figure 1.

Ce procédé comprend plusieurs étapes de test dans lesquelles on vérifie le mode de fonctionnement du véhicule automobile par analyse des paramètres de fonctionnement pour ensuite commander le système d'entraînement.

Dans une étape E1, on vérifie si le levier de commande est dans la position de neutre. Si tel est le cas, on vérifie lors d'une étape E2 si la vitesse du véhicule est nulle et si un signal d'actionnement de pédale de frein est détecté. Si ces deux conditions sont remplies, on commande dans une étape E3 une mise au neutre mécanique en désaccouplant l'arbre moteur 2b de l'arbre mené 4.

Si à l'étape E2 l'une des deux conditions n'est pas vérifiée, alors on commande dans une étape E4 une mise au neutre logicielle. Cette mise au neutre logicielle comprend plusieurs étapes.

En se référant à la figure 3, dans l'étape E41, on compare la vitesse du véhicule avec des vitesses de seuil V1 et V2. A partir de la comparaison de la vitesse du véhicule avec ces seuils de vitesse, on impose un rapport de transmission R1 ou R2. Les rapports de transmission R1 et R2 lient la vitesse de rotation de l'arbre moteur 2b du moteur électrique 2a et la vitesse de rotation de l'arbre 4 mené portant les roues. Le choix du rapport de transmission R1 ou R2 est défini au moyen d'une hystérésis sur la vitesse.

Dans l'étape suivante E42, on pilote le dispositif de couplage 3 pour engager le rapport défini à l'étape E41.

On commande ensuite (étape E43) le moteur électrique 2a de sorte qu'il réalise un couple nul sur les roues.

Le procédé comprend également une étape E5 dans laquelle on vérifie si le contact du moteur est mis. Si tel n'est pas le cas, on passe à l'étape E3 de mise au neutre mécanique, dans laquelle on découple l'arbre moteur 2a de l'arbre mené 4.

Une étape de test E6 permet également de commander une mise au neutre mécanique, si le levier de commande du rapport de vitesse est sur « Park ».

Un tel procédé permet de définir quel mode de commande de la mise au neutre est le plus approprié à la situation de conduite en garantissant le confort du conducteur. Ainsi, si l'on détecte une immobilisation du véhicule avec une volonté d'arrêt, la commande de la mise au neutre est réalisée par désaccouplement de l'arbre moteur et de l'arbre portant les roues. Dans cette situation, le réengagement d'une vitesse ne cause pas de désagréments, les pièces à coupler étant immobiles.

Au contraire, si le passage par la position neutre est temporaire ou s'il est effectué par la volonté du conducteur de circuler en roue libre, on couple l'arbre moteur électrique et l'arbre portant les roues et l'on commande le moteur électrique de manière à fournir un couple nul sur les roues. De la sorte, la réalisation de la commande de roue libre ne nécessite pas de désaccouplement de l'arbre moteur et de l'arbre portant les roues. Ainsi, aucune procédure de réengagement n'est nécessaire et le confort de conduite du conducteur est amélioré.

L'invention concerne tous les véhicules automobiles pourvus d'un moteur électrique et d'un dispositif de couplage d'un arbre moteur aux roues du véhicule apte à s'ouvrir, laissant l'arbre portant les roues et l'arbre moteur désaccouplés. A ce titre, l'invention concerne également les systèmes de transmission des véhicules hybrides.

## Revendications

1. Procédé de commande d'un système d'entraînement (1) d'un véhicule automobile comportant un moteur électrique (2a) entraînant un arbre moteur (2b), un arbre mené (4) portant des roues et un dispositif de couplage (3) apte à prendre au moins une première position dans laquelle l'arbre moteur et l'arbre mené sont couplés et au moins une deuxième position dans laquelle l'arbre moteur et l'arbre mené sont découplés, un moyen de pilotage du dispositif de couplage et un calculateur (7) apte à commander le moyen de pilotage pour réaliser la mise au neutre par désaccouplement de l'arbre moteur et de l'arbre portant les roues, le calculateur comprenant :
- un premier module (8) apte à interpréter des signaux relatifs à des paramètres de fonctionnement du véhicule pour détecter la volonté du conducteur d'arrêter son véhicule, ou si le passage par la position neutre est temporaire ou effectué par la volonté du conducteur de rouler en roue libre,
- et un deuxième module (9) apte à commander le moteur électrique pour imposer un couple nul aux roues sans désaccoupler l'arbre moteur de l'arbre menée si le passage par la position neutre est temporaire ou effectué par la volonté de rouler en roue libre,
le procédé est **caractérisé en ce qu'**il comprend les étapes suivantes :
- une première étape (E1) de vérification de la position du levier de commande du dispositif de couplage en position neutre,
- si la première étape est vérifiée, une deuxième étape (E2) de vérification de deux conditions étant:
∘ si la vitesse du véhicule est nulle et,
∘ si un signal d'actionnement de pédale de frein est détecté,
- si la deuxième étape est vérifiée, alors une troisième étapes (E3) de mise en neutre mécanique dans laquelle le dispositif de couplage (7) est piloté en position de désaccouplement de l'arbre moteur et de l'arbre menée,
- si lors de la deuxième étape (E2) au moins un des conditions n'est pas remplie, alors quatrième étape (E4) dans laquelle on commande une mise en neutre logiciel commandant le moteur électrique pour imposer un couple nul aux roues sans désaccoupler l'arbre moteur de l'arbre menée.

2. Procédé selon la revendication précédente dans lequel le système, comprend en outre un moteur thermique entraînant un deuxième arbre moteur, le dispositif de couplage étant apte à transmettre sélectivement le couple du premier et/ou du deuxième arbre moteur à l'arbre portant les roues.

3. Procédé selon l'une des revendications précédentes, dans lequel on compare la vitesse du véhicule avec des seuils de vitesse et on couple l'arbre moteur et l'arbre mené portant les roues avec un rapport de transmission différent selon le résultat de la comparaison.

4. Procédé selon la revendication précédente, comprenant deux seuils de vitesse et deux rapports de transmission.

5. Procédé selon la revendication 3 ou 4, dans lequel l'étape de comparaison de la vitesse du véhicule avec les seuils de vitesse s'effectue au moyen d'une hystérésis.

## Patentansprüche

1. Verfahren zur Steuerung eines Antriebssystems (1) eines Kraftfahrzeugs, welches einen Elektromotor (2a), der eine Motorwelle (2b) antreibt, eine Abtriebswelle (4), die Räder trägt, und eine Kopplungsvorrichtung (3), die geeignet ist, mindestens eine erste Position, in der die Motorwelle und die Abtriebswelle gekoppelt sind, und mindestens eine zweite Position, in der die Motorwelle und die Abtriebswelle entkoppelt sind, einzunehmen, ein Steuerungsmittel für die Kopplungsvorrichtung und einen Rechner (7), der geeignet ist, das Steuerungsmittel zu steuern, um die Rücksetzung in die Neutralstellung durch Entkopplung der Motorwelle und der die Räder tragenden Welle durchzuführen, aufweist, wobei der Rechner umfasst:
- ein erstes Modul (8), das geeignet ist, auf Betriebsparameter des Fahrzeugs bezogene Signale zu interpretieren, um den Willen des Fahrers zu erkennen, sein Fahrzeug anzuhalten, oder zu erkennen, ob der Durchgang durch die Neutralstellung zeitweilig ist oder durch den Willen des Fahrers erfolgt, im Freilauf zu fahren,
- und ein zweites Modul (9), das geeignet ist, den Elektromotor zu steuern, um den Rädern ein Drehmoment null zu verleihen, ohne die Motorwelle von der Abtriebswelle abzukoppeln, falls der Durchgang durch die Neutralstellung zeitweilig ist oder durch den Willen erfolgt, im Freilauf zu fahren,
wobei das Verfahren **dadurch gekennzeichnet ist, dass** es die folgenden Schritte umfasst:
- einen ersten Schritt (E1) der Überprüfung der Position des Steuerhebels der Kopplungsvorrichtung in der Neutralstellung,
- falls die Überprüfung im ersten Schritt erfolgreich war, einen zweiten Schritt (E2) der Überprüfung von zwei Bedingungen, nämlich:
∘ ob die Geschwindigkeit des Fahrzeugs null ist und
∘ ob ein Bremspedalbetätigungssignal erkannt wird,
- falls die Überprüfung im zweiten Schritt erfolgreich war, einen dritten Schritt (E3) der mechanischen Rücksetzung in die Neutralstellung, in dem die Kopplungsvorrichtung (7) in die Position der Entkopplung der Motorwelle und der Abtriebswelle gesteuert wird,
- falls im zweiten Schritt (E2) wenigstens eine der Bedingungen nicht erfüllt ist, dann einen vierten Schritt (E4), in dem eine softwaremäßige Rücksetzung in die Neutralstellung bewirkt wird, bei welcher der Elektromotor so gesteuert wird, dass den Rädern ein Drehmoment null verliehen wird, ohne die Motorwelle von der Abtriebswelle zu entkoppeln.

2. Verfahren nach dem vorhergehenden Anspruch, wobei das System außerdem einen Verbrennungsmotor umfasst, der eine zweite Motorwelle antreibt, wobei die Kopplungsvorrichtung geeignet ist, selektiv das Drehmoment der ersten und/oder der zweiten Motorwelle auf die Welle, welche die Räder trägt, zu übertragen.

3. Verfahren nach einem der vorhergehenden Ansprüche, wobei die Geschwindigkeit des Fahrzeugs mit Geschwindigkeitsschwellenwerten verglichen wird und wobei die Motorwelle und die Abtriebswelle, welche die Räder trägt, je nach dem Ergebnis des Vergleichs mit einem unterschiedlichen Übersetzungsverhältnis gekoppelt werden.

4. Verfahren nach dem vorhergehenden Anspruch, welches zwei Geschwindigkeitsschwellenwerte und zwei Übersetzungsverhältnisse umfasst.

5. Verfahren nach Anspruch 3 oder 4, wobei der Schritt des Vergleichs der Geschwindigkeit des Fahrzeugs mit Geschwindigkeitsschwellenwerten mittels einer Hysterese vorgenommen wird.

## Claims

1. Method for controlling a drive system (1) of an automotive vehicle comprising an electric motor (2a) driving a driving shaft (2b), a driven shaft (4) bearing wheels and a coupling device (3) capable of assuming at least a first position in which the driving shaft and the driven shaft are coupled and at least a second position in which the driving shaft and the driven shaft are decoupled, a means for controlling the coupling device and a computer (7) capable of commanding the control means to place the vehicle in neutral by uncoupling the driving shaft and the shaft bearing the wheels, the computer comprising:
- a first module (8) capable of interpreting signals relating to operating parameters of the vehicle so as to detect the desire of the driver to stop his or her vehicle, or if the passing through the neutral position is temporary or performed through the desire of the driver to coast,
- and a second module (9) capable of commanding the electric motor to impose a zero torque on the wheels without decoupling the driving shaft from the driven shaft if the passing through the neutral position is temporary or performed through the desire to coast,
the method being **characterized in that** it comprises the following steps:
- a first step (E1) of verifying whether the position of the control lever controlling the coupling device is the neutral position,
- if the first step is verified, a second step (E2) of verifying two conditions, these being:
o whether the vehicle speed is zero, and
o whether a brake pedal actuation signal is detected,
- if the second step is verified, then a mechanical neutral-placing third step (E3) in which the coupling device (7) is commanded to assume the position of decoupling the driving shaft and the driven shaft,
- if, during the second step (E2) at least one of the conditions is not met, then a fourth step (E4) in which a software neutral-placing operation is commanded, commanding the electric motor to impose a zero torque on the wheels without decoupling the driving shaft from the driven shaft.

2. Method according to the preceding claim, wherein the system further comprises a combustion engine driving a second driving shaft, the coupling device being capable of selectively transmitting the torque of the first and/or of the second driving shaft to the shaft bearing the wheels.

3. Method according to one of the preceding claims, wherein the speed of the vehicle is compared with speed thresholds and the driving shaft and the driven shaft bearing the wheels are coupled with a gear ratio that is different depending on the result of the comparison.

4. Method according to the preceding claim, comprising two speed thresholds and two gear ratios.

5. Method according to Claim 3 or 4, wherein the step of comparing the speed of the vehicle with the speed thresholds is performed by means of a hysteresis.
